# EUROPEAN PATENT APPLICATION

(11) **EP 1 482 658 A2**
(43) Date of publication of application: **01.12.2004**
(21) Application number: 04011464.7
(22) Date of filing: 13.05.2004
(51) Int. Cl.: H04B 7/08

(54) **Antenna diversity transceiver and method of switching reception antenna**

(30) Priority: 28.05.2003 JP 2003150247
(71) Applicant: NEC CORPORATION, Tokyo (JP)
(72) Inventor: Kiribayashi, Shinji, Minato-ku, Tokyo (JP)
(74) Representative: Glawe, Delfs, Moll & Partner

(57) **Abstract**

An antenna diversity transceiver (2) selects at least one of a plurality of antennas (5,6,12) with a good condition during a standby state before communication. Preferably, the transceiver selects the antennas having the highest reception electric field level when a predetermined user operation, such as opening an upper unit, extending an extendable external antenna, or operating input keys, is detected. The transceiver may select the antennas before the transceiver transmits or receives a signal to or from said based station during a standby state.

## Description

This application is based upon and claims the benefit of priority from Japanese Patent Application No. 150247/2003 filed on May 28, 2003, the content of which are incorporated by reference.

### BACKGROUND OF THE INVENTION

### 1. Field of the Invention

The present invention relates to an antenna diversity transceiver and method of switching a reception antenna.

### 2. Description of the Related Art

An antenna diversity receiver which switches and selects a reception antenna from among a plurality of antennas has been conventionally proposed.

An example of such an antenna diversity receiver is described in the Japanese Patent Application Publication Laid-Open Kokai No. 307492/2003 (hereinafter referred to as the "first reference"). The receiver described in the first reference switches the reception antenna to the antenna having the highest reception level among a plurality of antennas during communication. The receiver turns off a measurement circuit for measuring the reception level of signals received by a plurality of antennas and stops switching the reception antenna to the antenna having the highest reception level, if the highest reception level is more than the predetermined level, or if the user sets the receiver not to switch antennas.

Japanese Patent Application Publication Laid-Open Kokai No. 036461/2001 (hereinafter referred to as the "second reference") shows another kind of the antenna diversity receiver. The second reference shows a personal digital cellular/personal handy phone system (PDC/PHS) composite mobile telephone. The descried mobile telephone communicates with either a PDC or a PHS system. The mobile telephone has a shared PDC/PHS antenna and a PDC built-in antenna. The mobile telephone periodically switches between these antennas based on a predetermined time period and selects one of the antennas. The mobile telephone periodically receives, by the selected antenna, a signal received from a base station during a standby state.

Moreover, Japanese Patent Application Publication Laid-Open Kokai No. 354073/2002 (hereinafter referred to as the "third reference") shows a different type of the antenna diversity receiver. The third reference discloses a foldable mobile telephone. The described mobile telephone has a shared (code division multiple access/global positioning satellite) CDMA/GPS antenna which is provided in a lower unit, and a GPS antenna which is provided in an upper unit or the surface of the lower unit. When the upper unit is open, the mobile telephone selects a GPS antenna to receive a signal from a base station. On the other hand, when the upper unit is closed, the mobile telephone selects a shared CDMA/GPS antenna to receive a signal from the base station.

The conventional antenna diversity receivers including the first, second and third references described above, however, do not switch from a reception antenna to the antenna having the highest reception level during a standby state.

### SUMMARY OF THE INVENTION

An object of the present invention is to provide an antenna diversity transceiver and method of switching a reception antenna for selecting a better antenna so that the receiver can start communication with the antenna in a good condition.

Another object of the present invention is to provide an antenna diversity transceiver and method of switching a reception antenna for selecting a better antenna in a good condition during a standby state before communication.

Still another object of the present invention is to provide an antenna diversity transceiver and method of switching a reception antenna for selecting a better antenna in a good condition just before the user starts communication.

Still another object of the present invention is to provide an antenna diversity transceiver and method of switching a reception antenna for selecting a better antenna in a good condition when the predetermined user operation is detected.

Still another object of the present invention is to provide an antenna diversity transceiver and method of switching a reception antenna for selecting a better antenna in a good condition when the transceiver is not transmitting or receiving a signal to or from a base station during a standby state.

Still another object of the present invention is to provide an antenna diversity transceiver and method of switching a reception antenna for selecting a better antenna in a good condition just before the transceiver transmits or receives a signal to or from a base station during a standby state.

In order to achieve the foregoing objects, the present invention comprises: a plurality of antennas; a switch which selects at least one of the plurality of antennas in a good condition for diversity receiving a signal received from a base station; and a controller which controls the switch so that the switch selects at least one of a plurality of antennas in a good condition during a standby state before communication.

In the present invention, the controller may control the switch so that the switch selects at least one of a plurality of antennas in a good condition just before a user starts communication or so that the switch selects at least one of a plurality of antennas in a good condition when a predetermined user operation is detected. The predetermined operation includes, but is not limited to, opening an upper unit, extending an extendable external antenna or operating input keys.

The controller of the present invention may control the switch so that the switch selects at least one of a plurality of antennas in a good condition when the transceiver is not transmitting or receiving a signal to or from said base station or so that the switch selects at least one of a plurality of antennas in a good condition just before the transceiver transmitting or receiving a signal to or from the based station.

Furthermore, the controller may control the switch so that the switch selects at least one of a plurality of antennas in a good condition after receiving a control information channel PCH (page channel) and before opening a FACH (forward access channel)/RACH (random access channel), after opening a FACH/RACH and before starting transmission/reception of data on said FACH/RACH, just before receiving a PI transfer channel PICH (page indicator channel) or just before adding a DCH (dedicated channel) for a user service.

Another exemplary embodiment of the present invention includes selecting at least one of a plurality of antennas in a good condition for diversity receiving a signal received from a base station during a standby state before communication.

Still another exemplary embodiment of the present invention includes selecting at least one of a plurality of antennas in a good condition for diversity receiving a signal received from a base station just before a user starts communication.

Still another exemplary embodiment of the present invention includes selecting at least one of a plurality of antennas in a good condition for diversity receiving a signal received from a base station when a predetermined user operation is detected.

Still another exemplary embodiment of the present invention includes selecting at least one of a plurality of antennas in a good condition for diversity receiving a signal received from a base station when an upper unit is open.

Still another exemplary embodiment of the present invention includes selecting at least one of a plurality of antennas in a good condition for diversity receiving a signal received from a base station when an extendable external antenna is extended.

Still another exemplary embodiment of the present invention includes selecting at least one of a plurality of antennas in a good condition for diversity receiving a signal received from a base station when input keys are operated.

Still another exemplary embodiment of the present invention includes selecting at least one of a plurality of antennas in a good condition for diversity receiving a signal received from a base station when the transceiver is not transmitting or receiving a signal to or from said base station.

Still another exemplary embodiment of the present invention includes selecting at least one of a plurality of antennas in a good condition for diversity receiving a signal received from a base station just before the transceiver transmitting or receiving a signal to or from said based station.

Still another exemplary embodiment of the present invention includes selecting at least one of a plurality of antennas in a good condition for diversity receiving a signal received from a base station after receiving a control information channel PCH and before opening a FACH/RACH.

Still another exemplary embodiment of the present invention includes selecting at least one of a plurality of antennas in a good condition for diversity receiving a signal received from a base station after opening a FACH/RACH and before starting transmission/reception of data on said FACH/RACH.

Still another exemplary embodiment of the present invention includes selecting at least one of a plurality of antennas in a good condition for diversity receiving a signal received from a base station just before receiving a PI transfer channel PICH.

Still another exemplary embodiment of the present invention includes selecting at least one of a plurality of antennas in a good condition for diversity receiving a signal received from a base station just before adding a DCH for a user service.

### BRIEF DESCRIPTION OF THE DRAWINGS

These and other objects, features and advantages of the invention will become fully apparent from the following detailed description taken in conjunction with accompanying drawings.

Figs. 1 (A) and 1 (B) are perspective views showing the outline of the antenna diversity transceiver of the exemplary embodiments according to the present invention.

Figs. 2(A) and 2 (B) are perspective views showing the outline of the antenna diversity transceiver of the exemplary embodiments according to the present invention.

Figs. 3 (A) and 3 (B) are perspective views showing the outline of the antenna diversity transceiver of the exemplary embodiments according to the present invention.

Figs. 4 (A) and 4 (B) are perspective views showing the outline of the antenna diversity transceiver of the exemplary embodiments according to the present invention.

Figs. 5 (A) and 5 (B) are perspective views showing the outline of the antenna diversity transceiver of the exemplary embodiments according to the present invention.

Figs. 6 (A) and 6 (B) are perspective views showing the outline of the antenna diversity transceiver of the exemplary embodiments according to the present invention.

Fig 7 is a functional diagram of the antenna diversity transceiver of the exemplary embodiments according to the present invention.

Fig. 8 is a flowchart for explaining the operation from power-ON to a standby state of the antenna diversity transceiver of the exemplary embodiments according to the present invention.

Fig. 9 is a sequential view for explaining the operation of the antenna diversity transceiver of the exemplary embodiments according to the present invention when the upper unit is open during a standby state.

Fig 10 is a sequential view for explaining the operation of the antenna diversity transceiver of the exemplary embodiments according to the present invention just before transmitting or receiving a signal to or from a base station.

Fig 11 is a sequential view for explaining another operation of the antenna diversity transceiver of the exemplary embodiments according to the present invention just before transmitting or receiving a signal to or from a base station.

Fig 12 is a sequential view for explaining operation of the antenna diversity transceiver of the exemplary embodiments according to the present invention just before adding the DCH (dedicated channel) for the user service.

### DETAILED DESCRIPTION OF THE EXEMPLARY EMBODIMENTS

The exemplary embodiments described herein are intended to assist with the understanding of the invention, and are not intended to limit the scope of the invention in any way.

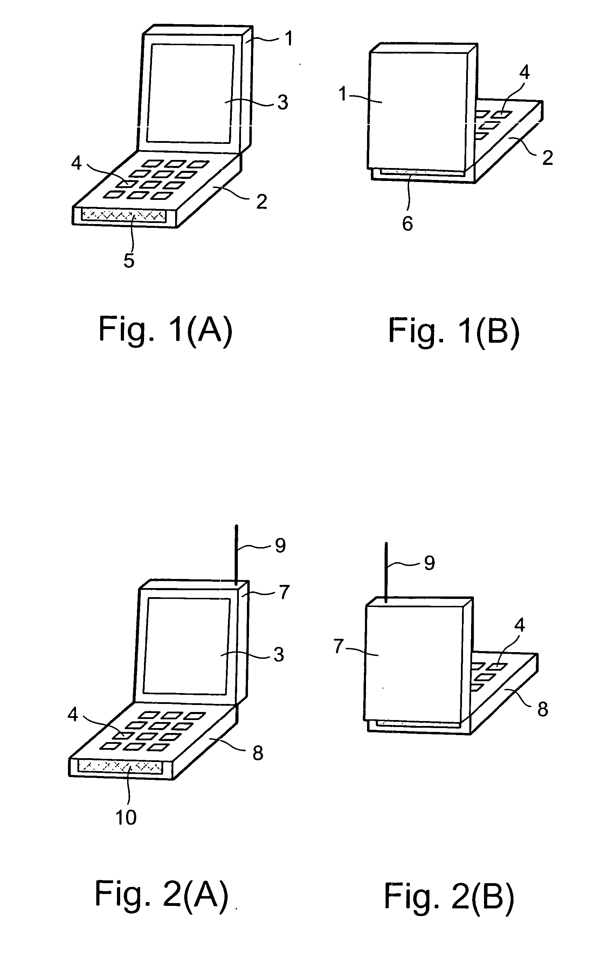

The aspects of the present invention are described below by referring to the attached drawings. Fig. 1 (A) to Fig. 6 (B) are perspective views showing the outline of the antenna diversity transceiver of the exemplary embodiments according to the present invention to explain antenna arrangement of the transceiver. As an example of the transceiver, a mobile telephone is shown in the described below exemplary embodiment.

Referring to Figs. 1 (A) and 1 (B), each end portion of upper unit 1 and a lower unit 2 is connected to each other by a hinge mechanism such that the units 1, 2 can be freely spread out. The inner surface of the upper unit 1 is provided with display 3. The inner surface of lower unit 2 is provided with input keys 4 for input of data and numbers.

Built-in antenna 5 is provided in the end portion of lower unit 2, while built-in antenna 6 is provided in the end portion of the hinge mechanism of lower unit 2. Built-in antennas 5, 6 are switched based on their reception condition as described later. Built-in antennas 5, 6 may be provided in any surface of upper or lower units 1, 2. Preferably, built-in antenna 5, 6 should be provided in side portions of units 1, 2.

Figs. 2 (A) and 2 (B) shows another antenna arrangement of the mobile telephone. The mobile telephone is provided with extendable external antenna 9 at the end portion of upper unit 7. Built-in antenna 10 is provided in the end portion of lower unit 8. The exemplary embodiment shown in Figs. 2 (A) and 2 (B) is the same as the exemplary embodiment shown in Figs. 1 (A) and 1 (B) with respect to the number of antennas, but is different in that one antenna is extendable external antenna 9. Of course, built-in antenna 10 may be provided in any portion of upper or lower units 7, 8 as shown in the exemplary embodiment of Figs. 1 (A) and 1 (b). Also, extendable external antenna 9 may be provided in any portion of upper or lower unit 7, 8.

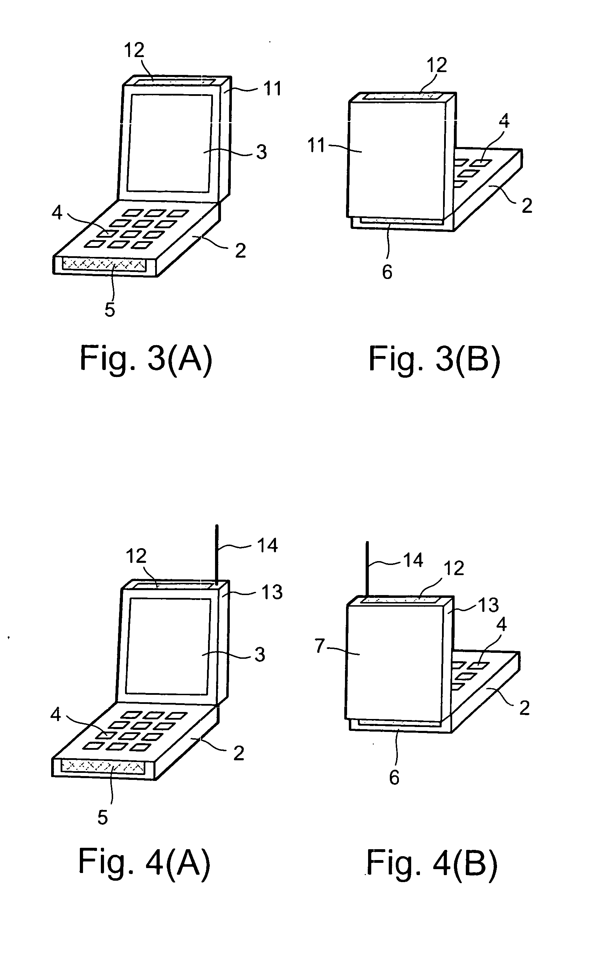

Figs. 3 (A) and 3 (B) show still another antenna arrangement of the mobile telephone. Lower unit 2 comprises two built-in antennas 5, 6 as shown in the exemplary embodiment of Figs. 1 (A) and 1 (b), and built-in antenna 12 is provided in the end portion of upper unit 11. That is, the mobile telephone has three antennas 5, 6, 12 from which to select. Of course, built-in antennas 5, 6, 12 may be provided in any portion of upper or lower units 11, 2.

Figs. 4 (A) and 4 (B) show still another antenna arrangement. Two built-in antennas 5, 6 are provided in lower unit 2 and built-in antenna 12 is provided in the end portion of upper unit 13. Extendable external antenna 14 is attached at the end of upper unit 13. Built-in antennas 5, 6, and extendable external antenna 14 may be provided in any portion of upper or lower units 13, 2.

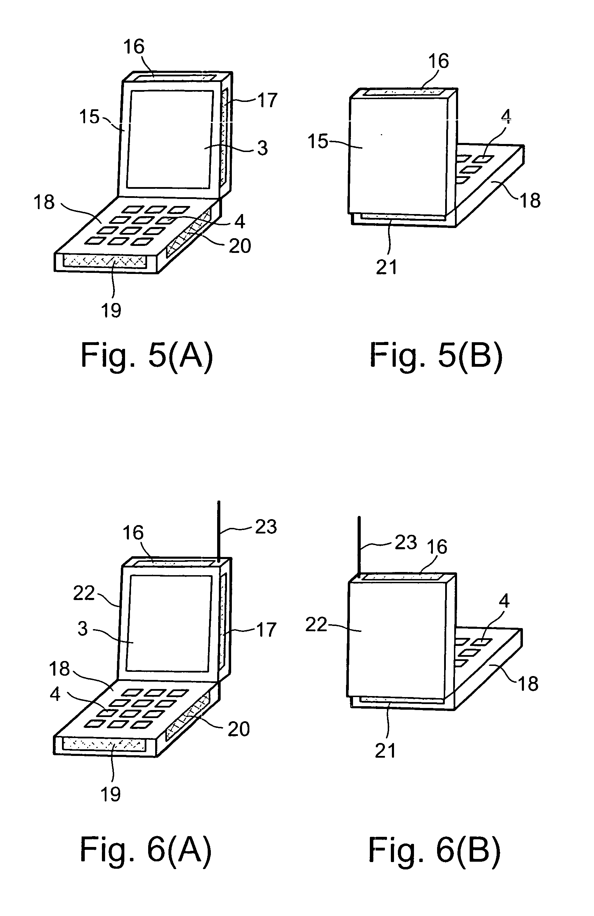

Figs. 5 (A) and 5 (B) shows still another antenna structure of the mobile telephone. Built-in antennas 16 and 17 are provided respectively in the end portion and in the right side of upper unit 15, and built-in antennas 19, 20, 21 respectively in the end portion, in the right side, and in the end portion at the hinge mechanism of lower unit 18. That is, the mobile telephone has five built-in antennas. Built-in antennas 16, 17, 19, 20, 21, may be provided in any portion of upper and lower units 15, 18 as well.

Figs. 6 (A) and 6 (B) show still another antenna arrangement of the exemplary embodiment. Lower unit 18 comprises the three built-in antennas 19, 20, 21. Also, built-in antenna 16, 17 is provided in upper unit 22. Extendable external antenna 23 is provided at the end portion of upper unit 22. That is, the mobile telephone has a total of six antennas, that is, five built-in antennas 16, 17, 19, 20, 21 and one external antenna 23. Built-in antennas and extendable external antenna 16, 17, 19, 20, 21, 23 may be provided in any portion of upper or lower units 22, 18, of course.

Also, the number of antennas of the exemplary embodiments do not limit the scope of the invention and may be modified depending on the circumstances.

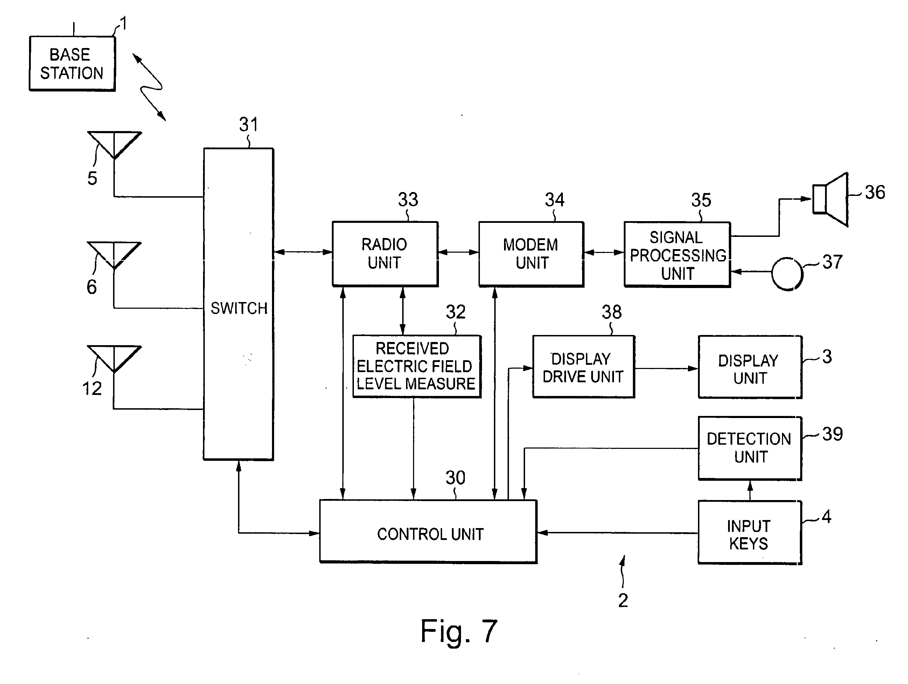

Fig. 7 is a functional diagram of the mobile telephone of the exemplary embodiments according to the present invention. Mobile telephone 2 has three built-in antennas 5, 6, 12 which correspond to the exemplary embodiment of the antenna arrangement shown in Figs. 3 (A) and 3 (B), as an example.

Referring to Fig. 7, built-in antennas 5, 6, and 12 of mobile telephone 2 are connected to a switch 31 and receive and transmit a signal from and to base station 1. Control unit 30 is a circuit for integrally controlling entire mobile telephone 2 based on the input data from input keys 4. Control unit 30 switches and controls switch 21 to connect one of built-in antennas 5, 6, and 12 to radio unit 33 based on the condition of the received signals. The control unit 30 may select another built-in antenna for transmitting a signal than a selected built-in antenna for receiving a signal. In this exemplary embodiment, applicant focuses on the receiving antenna to ease understanding the present invention.

There are several standards to select a reception antenna among a plurality of antennas such as highest electric field level or lowest bit error ratio. In this exemplary embodiment, as an example, mobile telephone 2 selects the reception antenna having the highest received electric field level.

Control unit 30 selects a better built-in antenna among the antennas 5, 6, 12 based on the received electric field level from received electric field level measure 32. Also, control unit 30 considers a predetermined detection signal detected by detection unit 39 to switch built-in antennas. The detail of selection of the antenna will be described latter.

Control unit 30 displays desired and received information input to display unit 3 by input keys 4 through display drive unit 38.

Radio unit 33 transmits a signal through the built-in antenna connected through switch 31, and performs a predetermined receiving process. Modem unit 34 modulates a transmitted voice signal and transmitted data in a predetermined modulation system and provides the result to radio unit 33, and outputs the voice signal and received data obtained by demodulating a received signal to signal processing unit 35.

Received electric field level measure 32 is connected to radio unit 33, measures the received electric field level input through radio unit 33, and outputs the measurement result to control unit 30. Signal processing unit 35 performs predetermined signal processing, and provides a demodulated voice signal to speaker 36 Signal processing unit 35 performs predetermined signal processing on the transmitted voice signal obtained after voice-electrical conversion by microphone 37 and outputs the signal to modem unit 34.

In this exemplary embodiments, mobile telephone 2 selects the built-in antenna having highest electric field level among built-in antennas 5, 6, 12 during a standby state before communication. The exemplary embodiments suggest the following two timings for switching built-in antennas:

### Exemplary Embodiment A:

When mobile telephone 2 detects the predetermined user operation.

### Exemplary Embodiment B:

Just before mobile telephone 2 transmits or receives a signal to or from a base station.

Based on the above timings according to the exemplary embodiments A and B, received electric field level measure 32 measures each received electric field level of the three built-in antennas 5, 6, 12, and provides the measurement result to control unit 30. Therefore, control unit 30 switches and controls switch 31 to connect the built-in antenna having the best received electric field level to radio unit 33.

### Exemplary Embodiment A

The exemplary embodiment A of switching a built-in antenna triggered by detecting the predetermined user operation is now described below. In this embodiment A, examples of the predetermined user operation include opening the upper unit, extending the extendable external antennas and operating the input keys.

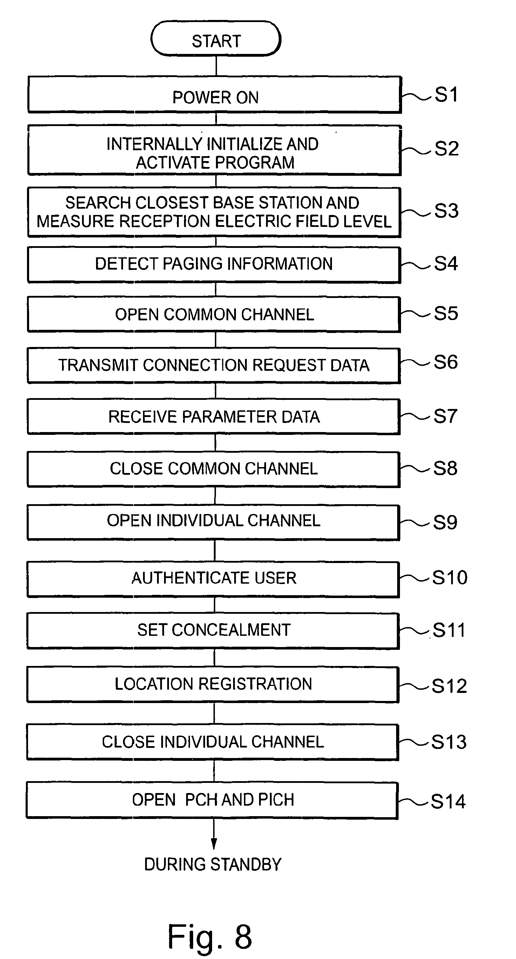

A feature of the exemplary embodiments is that mobile telephone 2 selects the built-in antenna during a standby state before communication. Therefore, before the explanation of the exemplary embodiment A, the operations from powering ON to a standby state are described in detail as a reference. Fig. 8 shows a flowchart for explaining the operation from powering ON to a standby state.

When mobile telephone 2 is turned on (step S1), the initialization of mobile telephone 2 and the activation of the program are performed (step S2). Next, mobile telephone 2 searches for surrounding base stations (step S3). In step S3, mobile telephone 2 looks for the radio wave of the closest base station by changing the frequency and scramble code. When mobile telephone 2 finds the radio wave of the base station, received electric field level measure 32 measures the reception electric field level of the CPICH (common pilot channel). The paging information is detected from the CPICH (step S4). The paging information contains a parameter to be set when mobile telephone 2 establishes communications with base station 1. Then, based on the paging information, the RACH and FACH (the common channels) are opened (step S5). After step S5, mobile telephone 2 transmits connection request data (step S6). Upon receipt of the connection request, base station 1 transmits a reply of the parameter data to open the individual channel assigned to each mobile telephone. Therefore, the connection requesting mobile telephone 2 receives the parameter data (step S7), and closes the common channel (step S8).

Next, mobile telephone 2 opens the DCH (dedicated channel) which is an individual channel for transfer of user information based on the parameter data received in step S7 (step S9), and performs user authentication (step S10). Then, mobile telephone 2 sets concealment with base station 1 (step S11), and makes the upper database of base station 1 register the location of mobile telephone 1 (step S12). After the location registration, the DCH is closed (step S13) and the PCH, which is a control information channel is opened, thereby entering a standby state (step S14). When the PCH is opened, the PICH is also opened simultaneously.

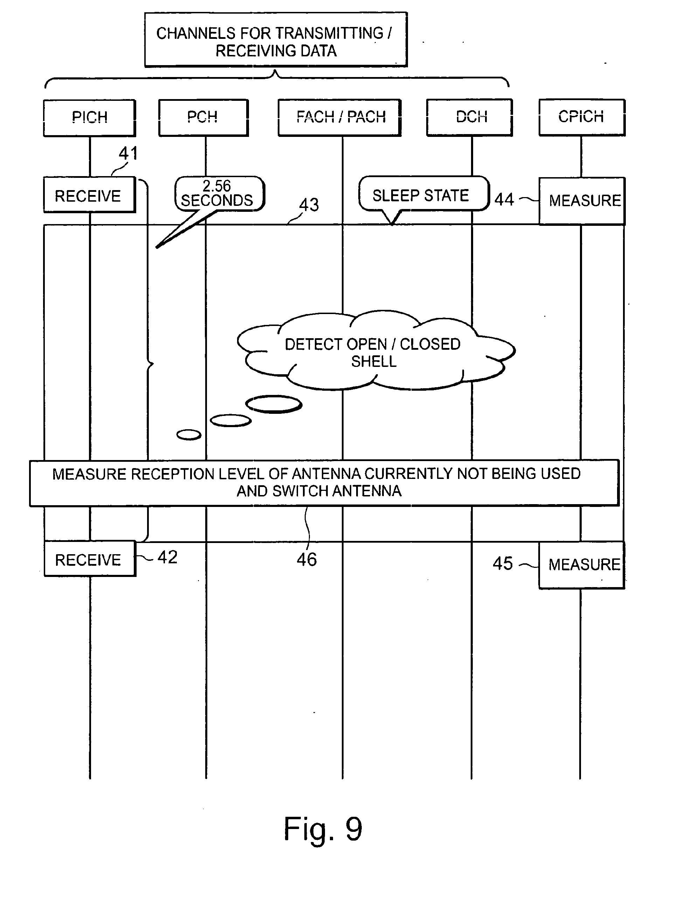

Now; the operation of mobile telephone 2 according to the exemplary embodiment A is described. First, the operation of mobile telephone 2 performed when the user opens upper unit 11 is described in detail by referring to the sequential view shown in Fig. 9. Fig. 9 shows a sequential view for explaining the operation of mobile telephone when upper unit 11 is open during a standby state.

During a standby state, the built-in antenna selected at the previous diversity selection is used. This example assumes that built-in antenna 5 is used. In a standby state, as indicated by 41, the data of the PICH transmitted from base station 1 is received by built-in antenna 5 at time intervals specified by base station 1. The time intervals are normally 2.56 seconds. Mobile telephone 2 receives the data of the PICH, and confirms whether or not there is PCH information, or there is an actual call. Unless there is a call, mobile telephone 2 receives the PICH data again, 2.56 seconds later as indicated by 42.

In the time period in which the PICH data is not received, control unit 30 stops the clock of the internal central processing unit (CPU), and turns off the circuit unit, if possible, thereby extending the life of the battery by reducing the power consumption. The stop state of the clock indicated by 43 is referred to as a sleep state. Mobile telephone 2 receives the radio wave of the CPICH constantly transmitted by base station 1, other than the reception of the PICH, as indicated by 44 and 45, and the received electric field level measure 32 measures the reception electric field level.

During the above-mentioned standby mode, if detection unit 39 detects that upper unit 11 is open for input of data by the user, such as a telephone number, the detection signal is input to control unit 30. Then, control unit 30 is triggered by the input of the detection signal, controls switch 31 to switch built-in antenna 6 which is currently not used to be connected to radio unit 33, and obtains the measurement result of the received electric field level of the radio wave of the CPICH by built-in antenna 6 from the received electric field level measure 32. Control unit 30 compares the measurement result of built-in antenna 6 with the received electric field level of built-in antenna 5 to check whether or not the measurement result of built-in antenna 6 is better. Control unit 30 connects built-in antenna 6 to radio unit 33 if it is better, and does not switch antennas if the measurement result of built-in antenna 6 is not better as compared with built-in antenna 5.

Control unit 30 controls switch 31 to connect the other built-in antenna 12, not currently being used, to the radio unit 33, and obtains the measurement result of the received electric field level of the radio wave of the CPICH by built-in antenna 12 from the received electric field level measure 32. Control unit 30 compares the measurement result of built-in antenna 12 with the received electric field level of built-in antenna 5 or built-in antenna 6 selected immediately before and currently being used to check whether or not the measurement result is better. Control unit 30 connects built-in antenna 12 to radio unit 33 if built-in antenna 12 is better. If it is not better, an antenna is not switched. Then, communications is established with base station 1 using the built-in antenna selected last.

The above operation of switching an antenna is completed until the user presses a transmission key (included in input keys 4) as shown as item 46. If an antenna is physically switched; the data transmission/reception cannot be successfully performed. Therefore, an antenna switching process is performed while no data is transmitted or received. If switching an antenna cannot be completed until the user presses the transmission key, an antenna having the highest reception level at the moment is selected.

As discussed, mobile telephone 2 may switch an antenna when extendable external antennas is extended or when input keys are operated. The operation of mobile phone 2 when mobile telephone 2 detects that extendable antennas are extended or that input keys are operated is the same as the operation performed when the user.opens the upper unit. Therefore, the detailed explanations about these operations are omitted.

### Exemplary Embodiment B

Exemplary embodiment B of switching a built-in antenna triggered by transmitting or receiving a signal to or from base station 1 is now described below. In this exemplary embodiment B, the following timings are introduced as examples.

### Timing 1:

After receiving the control information channel PCH (page channel) and before opening the FACH (forward access channel)/RACH (random access channel)

### Timing 2:

After opening the FACH/RACH and before starting transmission/reception of data on the FACH/RACH

### Timing 3:

Just before receiving the PI transfer channel PICH (page indicator channel)

### Timing 4:

Just before adding the DCH (dedicated channel) for the user service

### Timings 1 and 2

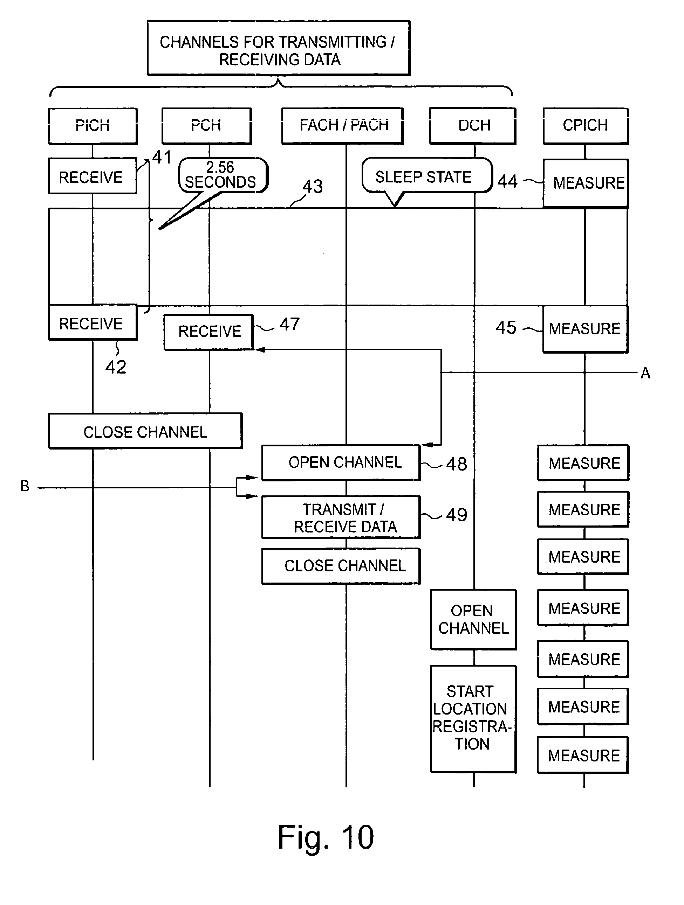

The exemplary embodiment according to the timings 1 and 2 is now described. Fig 10 shows a sequential view for explainng the operation according to timings 1 and 2 of the exemplary embodiment B. The same steps shown in Fig. 9 are assigned the same reference numerals in Fig. 10, therefore the explanations are omitted from here.

In Fig. 10, when mobile telephone 2 receives the PICH data in step S 41 from base station 1 and detects the presence of the PCH information in step S42, then the PCH data transmitted from base station 1 is received as indicated by 47.

The received PCH data contains the trigger for start the receipt of data, and mobile telephone 2 is connected to base station 1. Detection unit 39 detects this, and inputs the detection signal to control unit 30. Thus, control unit 30 is triggered by the input of the detection signal, controls switch 31 to connect the built-in antenna 6, currently not being used, to radio unit 33, and obtains the measurement result of the received electric field level of the radio wave of the CPICH by built-in antenna 6 from received electric field level measure 32. Control unit 30 compares the measurement result with the received electric field level of built-in antenna 5 being used during a standby state, and controls switch 31 to select the built-in antenna having the better received electric field level.

Then, control unit 30 controls switch 31 again and selects built-in antenna 12, currently not being used, compares the measurement result of the received electric field level of the radio wave of the CPICH by built-in antenna 12 with the received electric field level of built-in antenna 5 or 6 selected immediately before and currently being used, and controls switch 31 to select the built-in antenna having the better received electric field level. Thus, the built-in antenna having the best received electric field level is connected to radio unit 33 through switch 31 during a timing indicated by A.

The operation from the reception of channel PCH to the completion of the antenna switching is performed before opening the channels FACH/RACH as indicated by 48 (timing 1). After opening the FACH/RACH, but before starting transmission/reception of data on the FACH/RACH, the best built-in antenna may be selected by the same operation described above (timing 2 as indicated B). Then, data is transmitted/received to and from base station 1 using the FACH/RACH by the built-in antenna selected last. If the antenna switching is not completed by transmission and reception on FACH/RACH as indicated by 49, the antenna having the best receive sensitivity at that time is selected.

### Timing 3

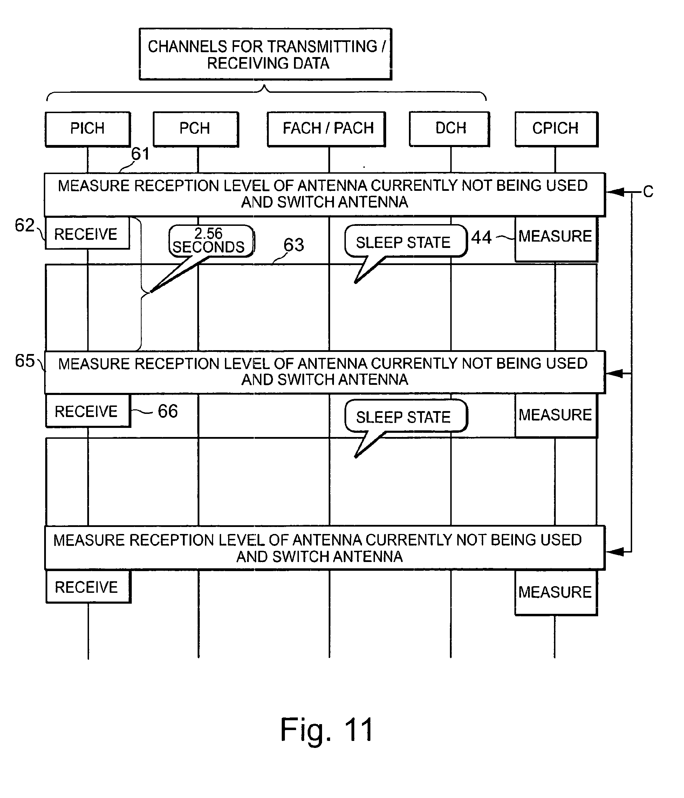

The exemplary embodiment according to the timing 3 is now described. Fig 11 shows a sequential view for explaining the operation according to the timing 3 of the exemplary embodiment B.

Fig. 11, as an example, assumes that built-in antenna 5 is selected among built-in antennas 5, 6, and 12. During a standby mode, mobile telephone 2 receives the data of the PICH-periodically transmitted (normally every 2.56 seconds) from base station 1.

After the data of the PICH is received with the timing indicated by 62, mobile telephone 2 enters a sleep state for a predetermined time shorter than 2.56 seconds in which the data of the next PICH is to be received as indicated by 63. As indicated by 64, when the data of the PICH is received, the received electric field level of the radio wave of the CPICH is measured. The above-mentioned sleep state 63 is automatically released immediately before receiving the next data of the PICH after continuing a predetermined time which is shorter than 2.56 seconds from the start of receiving the previous data of the PICH, and the CPU and the circuit unit of mobile telephone 2 is turned on.

After a sleep state is released, detection unit 39 provides the detection signal to control unit 30. Control unit 30 uses the input of the detection signal as a trigger, controls switch 31, switches built-in antenna 6, currently not being used to be connect to radio unit 33, and obtains the measurement result of the received electric field level of radio wave of the CPICH by built-in antenna 6 from the received electric field level measure 32.
Control unit 30 compares the measurement result with the received electric field level of built-in antenna 5 currently being used during a standby state and determines whether or not the measurement result is better Control unit 30 connects built-in antenna 6 to radio unit 33 (an antenna is switched) if the measurement result is better, and does not switch the antenna when the measurement result is not better.

Control unit 30 again controls switch 31, switches the other built-in antenna 12, currently not.being used to be connected to radio unit 33, and obtains the measurement result of the received electric field level of the radio wave of the CPICH by built-in antenna 12 from received electric field level measure 32 Control unit 30 compares the measurement result with the received electric field level of built-in antenna 5 or 6 selected. immediately before and currently being used and deterimines whether or not the measurement result is better. Control unit 30 connects built-in antenna 12 to radio unit 33 (an antenna is switched) when the measurement result is better, and does not switch the antenna when the measurement result is not better.

The antenna switching timing is shown by C in Fig. 11.

The operation from wake-up to the completion of the antenna switching is performed before the next data of the PICH is received as indicated by 65. Then, as indicated by 66, the next data of the PICH is received by the built-in antenna selected last as indicated by 66. If the antenna switching is not completed before receipt of the next data of the PICH, the antenna having the best receive sensitivity at that time is selected.

### Timing 4

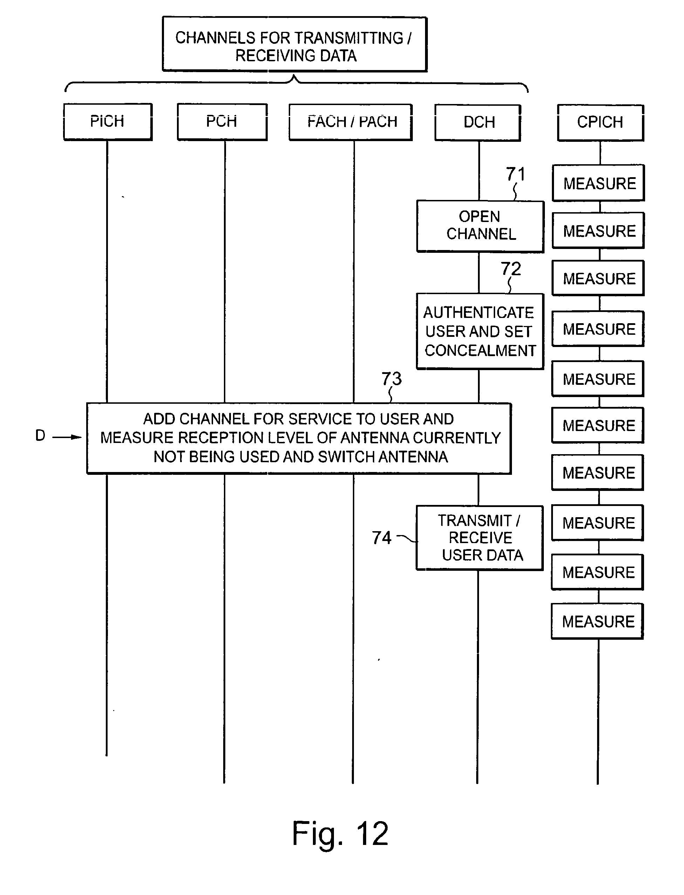

The exemplary embodiment according to the timing 4 is now described. Fig 12 shows a sequential view for explaining the operation according to the timing 4 of the exemplary embodiment B.

In Fig. 12, when mobile telephone 2 is connected to base station 1, a common channel (FACH/RACH) is opened, and a connection request is transmitted from mobile telephone 2 to base station 1 through the common channel. Upon receipt of the connection request, base station 1 transmits the data for opening an individual channel (DCH) to mobile telephone 2, which is a requester through the common channel. When mobile telephone 2 receives the data through the common channel, it closes the common channel, and opens the individual channel (DCH) as indicated by 71. Mobile telephone 2 transmits a message indicating that the operation of connecting mobile telephone 2 has been completed. When base station 1 receives the message, the connecting operation is also completed by base station 1.

Then, mobile telephone 2 performs a user authenticating process by inquiring of base station 1 about the user information as indicated by 72, and then settings are made with base station 1 to prevent tapping (setting the concealment). Then, mobile telephone 2 performs the process according to the trigger during transmission, and adds the DCH for user service when it is to be provided. When the DCH for the user service is added, the transmission/reception of data between mobile telephone 2 and base station 1 is suspended.

Detection unit 39 detects adding the DCH for the user service, and input the detection signal to control unit 30. Thus, control unit 30 uses as a trigger the input of the detection signal, controls switch 31 and connects built-in antenna 6, currently not being used to radio unit 33, and obtains the received electric field level of the radio wave of the CPICH by built-in antenna 6 from received electric field level measure 32. Control unit 30 compares the measurement result with the received electric field level of built-in antenna 5 being used immediately before, and controls switch 31 such that the built-in antenna having a better received electric field level can be selected.

Control unit 30 controls switch 31 again to connect built-in antenna 12 currently not being used to radio unit 33, compares the measurement result of the received electric field level of the radio wave of the CPICH by built-in antenna 12 obtained by received electric field level measure 32 with the received electric field level of built-in antenna 5 or 6 selected immediately before and currently being used. Control unit 30 controls switch 31 to select the built-in antenna having a better received electric field level. Thus, a built-in antenna having the best received electric field level is connected to radio unit 33 through switch 31.

The operation from the point of detecting the addition of the DCH for the above-mentioned user service to the completion of antenna switching is performed by the start of transmission/reception of user data using the added DCH as indicated by 73 and D. After the antenna switching, the data transmission/reception using the DCH and the optimum built-in antenna is performed with base station 1 as indicated by 74.

The present invention is not limited to the above-mentioned exemplary embodiments, but an antenna switching operation can be similarly performed when a plurality of antennas are externally connected to a data communications card for communications over a mobile telephone network other than the mobile telephone.

The previous description of embodiments is provided to enable a person skilled in the art to make and use the present invention. Moreover, various modifications to these embodiments will be readily apparent to those skilled in the art, and the generic principles and specific examples defined herein may be applied to other embodiments without the use of inventive faculty. Therefore, the present invention is not intended to be limited to the embodiments described herein but is to be accorded the widest scope as defined by the limitations of the claims and equivalents.

## Claims

1. An antenna diversity transceiver comprising:
a plurality of antennas;
a switch which selects at least one of said plurality of antennas with a good condition for diversity receiving a signal received from a base station; and
a controller which controls said switch so that said switch selects at least one of said plurality of antennas with a good condition during a standby state before communication.

2. The antenna diversity transceiver claimed in claim 1, wherein said good condition is the highest electric field level.

3. The antenna diversity transceiver claimed in claim 1, wherein said transceiver is a mobile telephone.

4. The antenna diversity transceiver claimed in claim 1, wherein said controller controls said switch so that said switch selects at least one of said plurality of antennas with said good condition before a user starts communication.

5. The antenna diversity transceiver claimed in claim 1, wherein said controller controls said switch so that said switch selects at least one of said plurality of antennas with said good condition when a predetermined user operation is detected.

6. The antenna diversity transceiver claimed in claim 5, wherein said predetermined operation is opening an upper unit.

7. The antenna diversity transceiver claimed in claim 5, wherein said predetermined operation is extending an extendable external antenna.

8. The antenna diversity transceiver claimed in claim 5, wherein said predetermined operation is operating input keys.

9. The antenna diversity transceiver claimed in claim 1, wherein said controller controls said switch so that said switch selects at least one of said plurality of antennas with said good condition when said transceiver is not transmitting or receiving a signal to or from said base station.

10. The antenna diversity transceiver claimed in claim 1, wherein said controller controls said switch so that said switch selects at least one of said plurality of antennas with said good condition before said transceiver transmitting or receiving a signal to or from said base station.

11. The antenna diversity transceiver claimed in claim 1, wherein said controller controls said switch so that said switch selects at least one of said plurality of antennas with said good condition after receiving a control information channel PCH (page channel) and before opening a FACH (forward access channel)/RACH (random access channel).

12. The antenna diversity transceiver claimed in claim 1, wherein said controller controls said switch so that said switch selects at least one of said plurality of antennas with said good condition after opening a FACH (forward access channel)/RACH (random access channel) and before starting transmission/reception of data on said FACH/RACH.

13. The antenna diversity transceiver claimed in claim 1, wherein said controller controls said switch so that said switch selects at least one of said plurality of antennas with said good condition before receiving a PI transfer channel PICH (page indicator channel).

14. The antenna diversity transceiver claimed in claim 1, wherein said controller controls said switch so that said switch selects at least one of said plurality of antennas with said good condition before adding a DCH (dedicated channel) for a user service.

15. An antenna diversity transceiver comprising:
a plurality of antenna means for receiving a signal from a base station;
switch means for selecting at least one of said plurality of antenna means with a good condition for diversity receiving; and
control means for controlling said switch means so that said switch means selects at least one of said plurality of antenna means with said good condition during a standby state before communication.

16. The antenna diversity transceiver claimed in claim 15, wherein said control means controls said switch means so that said switch means selects at least one of said plurality of antenna means with said good condition before a user starts communication.

17. The antenna diversity transceiver claimed in claim 15, wherein said control means controls said switch means so that said switch means selects at least one of said plurality of antenna means with said good condition when a predetermined user operation is detected.

18. The antenna diversity transceiver claimed in claim 15, wherein said control means controls said switch means so that said switch means selects at least one of said plurality of antenna means with said good condition when said transceiver is not transmitting or receiving a signal to or from said base station.

19. The antenna diversity transceiver claimed in claim 15, wherein said control means controls said switch means so that said switch means selects at least one of said plurality of antenna means with said good condition before said transceiver transmitting or receiving a signal to or from said base station.

20. A method of switching a reception antenna including selecting at least one of a plurality of antennas with a good condition for diversity receiving a signal received from a base station during a standby state before communication.

21. A method of switching a reception antenna including selecting at least one of a plurality of antennas with a good condition for diversity receiving a signal received from a base station before a user starts communication.

22. A method of switching a reception antenna including selecting at least one of a plurality of antennas with a good condition for diversity receiving a signal received from a base station when a predetermined user operation is detected.

23. A method of switching a reception antenna including selecting at least one of a plurality of antennas with a good condition for diversity receiving a signal received from a base station when an upper unit is open.

24. A method of switching a reception antenna including selecting at least one of a plurality of antennas with a good condition for diversity receiving a signal received from a base station when an extendable external antenna is extended.

25. A method of switching a reception antenna including selecting at least one of a plurality of antennas with a good condition for diversity receiving a signal received from a base station when input keys are operated.

26. A method of switching a reception antenna including selecting at least one of a plurality of antennas with a good condition for diversity receiving a signal received from a base station when said transceiver is not transmitting or receiving a signal to or from said base station.

27. A method of switching a reception antenna including selecting at least one of a plurality of antennas with a good condition for diversity receiving a signal received from a base station before said transceiver transmitting or receiving a signal to or from said base station.

28. A method of switching a reception antenna including selecting at least one of a plurality of antennas with a good condition for diversity receiving a signal received from a base station after receiving a control information channel PCH (page channel) and before opening a FACH (forward access channel)/RACH (random access channel).

29. A method of switching a reception antenna including:
selecting at least one of a plurality of antennas with a good condition for diversity receiving a signal received from a base station after opening a FACH (forward access channel)/RACH (random access channel) and before starting transmission/reception of data on said FACH/RACH.

30. A method of switching a reception antenna including:
selecting at least one of a plurality of antennas with a good condition for diversity receiving a signal received from a base station before receiving a PI transfer channel PICH (page indicator channel).

31. A method of switching a reception antenna including:
selecting at least one of a plurality of antennas with a good condition for diversity receiving a signal received from a base station before adding a DCH (dedicated channel) for a user service.
